# EUROPÄISCHE PATENTSCHRIFT

(11) **EP 2 569 549 B1**
(45) Veröffentlichungstag und Bekanntmachung des Hinweises auf die Patenterteilung: **19.04.2017**
(21) Anmeldenummer: 11752091.6
(22) Anmeldetag: 05.05.2011
(51) Int. Cl.: F16B 37/04

(54) **ELEKTRISCH ISOLIERENDE KÄFIGMUTTER**
ELECTRICALLY INSULATING CAGE NUT
ÉCROU CAGE ÉLECTRIQUEMENT ISOLANT

(30) Priorität: 12.05.2010 DE 202010006746 U
(43) Veröffentlichungstag der Anmeldung: 20.03.2013
(73) Patentinhaber: Nedschroef Schrozberg GmbH, 74575 Schrozberg (DE)
(72) Erfinder: OBERNDÖRFER, Siegfried, 74582 Gerabronn (DE); GRAEF, Detlef, 74575 Schrozberg (DE)
(74) Vertreter: Patentanwälte Dörner & Kötter PartG mbB
(86) Internationale Anmeldenummer: PCT/DE2011/050013
(87) Internationale Veröffentlichungsnummer: WO 2011/141020

(56) Entgegenhaltungen:
- DE-U1- 9 409 087
- US-A1- 2004 136 804

## Beschreibung

### Technisches Gebiet

Die vorliegende Erfindung betrifft eine elektrisch isolierende Käfigmutter mit einem Mutternkörper, der in einem Käfig aufgenommen ist, bei der der Mutternkörper einen zylindrischen Ansatz und ein verbreitertes Halteelement umfasst, und der zylindrische Ansatz ein Innengewinde trägt und sich durch eine Öffnung in dem Käfig nach außen erstreckt, wobei der Innendurchmesser der Öffnung wesentlich größer als der Außendurchmesser des zylindrischen Ansatzes (der Mutter) aber kleiner als das Außenabmaß des Halteelementes (Flansch der Mutter) ist und zwischen dem Käfig und dem zylindrischen Ansatz eine Isolatorvorrichtung angeordnet ist. Solche elektronisch isolierenden Käfigmuttern finden vorzugsweise dort Verwendung, wo verhindert werden soll, dass das Innengewinde einer an einem Bauteil befestigten Mutter beim elektrostatischen Beschichten (also beispielsweise bei Elektrophoreselackierung) des Bauteils mit der Beschichtungsmasse oder dem Lack zugesetzt wird.

### Stand der Technik

Gemäß dem bisher in der Industrie üblichen Stand der Technik gemäß DE 94 09 087 U1 und DE 195 33 138 C1 umfassten solche elektrisch isolierenden Käfigmuttern ein zweiteiliges Isolatorelement, welches von außen auf die Öffnung in dem Käfig aufgesteckt, und durch eine auf dem zylindrischen Ansatz des Mutternkörpers befestigte isolierende Beilagscheibe dort gehalten war. Aus der US 2004/136 804 A1 ist bereits eine elektrisch isolierende Käfigmutter mit einem Mutternkörper bekannt, der in einem Käfig aufgenommen ist, bei der der Mutternkörper einen zylindrischen Ansatz und ein verbreitertes Halteelement umfasst, und der zylindrische Ansatz ein Innengewinde trägt und sich durch eine Öffnung in den Käfig nach außen erstreckt, wobei der Innendurchmesser der Öffnung wesentlich größer als der Außendurchmesser des zylindrischen Ansatzes, aber kleiner als das Außenabmaß des Halteelements ist, und zwischen dem Käfig und dem zylindrischen Ansatz eine Isolatorvorrichtung angeordnet ist, die einstückig ausgebildet ist, wodurch die Käfigmutter nur aus drei Bauteilen besteht, und die Isolatorvorrichtung einen hohlzylindrischen Körper aufweist.

Dieser Stand der Technik führte einerseits zu einem umständlichen und mühsamen Herstellungsverfahren und zum anderen war die Konstruktion nicht in allen Einbaulagen (Überkopf, seitlich hängend im Tauchlackbad-Durchlauf) sehr zuverlässig und nicht sehr widerstandsfähig.

### Darstellung der Erfindung

Aufgabe der vorliegenden Erfindung ist es daher, eine solche elektrisch isolierende Käfigmutter dergestalt weiterzubilden, dass die Fertigung wesentlich einfacher und kostengünstiger wird, und gleichzeitig die Stabilität und die Zuverlässigkeit in allen Einbaulagen der Käfigmutter deutlich verbessert wird.

Erfindungsgemäß wird diese Aufgabe dadurch gelöst, dass die Isoliervorrichtung einen hohlzylindrischen Körper aufweist, mit dem sie an dem zylindrischen Ansatz fest angebracht ist, und der an beiden Enden sich flächig nach außen erstreckende Isolatorplatten aufweist, zwischen denen der Rand der Öffnung in dem Käfig zumindest radial zu der Rotationsachse des zylindrischen Ansatzes beweglich aufgenommen ist.

Besonders bevorzugt ist es dabei, wenn die am Halteelement angeordnete Isolierplatte das gesamte Halteelement in Richtung auf den Käfig hin abdeckt. Um die Verdrehsicherung und die Isolierwirkung mit möglichst wenigen Bauteilen zu realisieren, ist es bevorzugt, dass die am Halteelement angeordnete Isolierplatte länglich rechteckig ausgebildet ist, und zwei einander gegenüberliegende längere Seiten aufweist. Dabei ist es besonders bevorzugt, wenn die dem Halteelement abgewandte Isolierplatte die Form eines abgerundeten, seitlich ausgebeulten Rechtecks aufweist. Die erfindungsgemäße Käfigmutter kann besonders einfach und kostengünstig hergestellt werden, indem die Isolatorvorrichtung seitlich in den Käfig eingeschoben wird und der Mutternkörper in Axialrichtung in die Isolatorvorrichtung eingesteckt oder eingepresst und dort verstemmt wird.

Die vorliegende Erfindung wird im Folgenden anhand des in den anliegenden Abbildungen dargestellten Ausführungsbeispieles näher erläutert. Es zeigt:

### Kurze Beschreibung der Abbildungen der Zeichnungen

Fig. 1 eine axiale Schnittdarstellung einer erfindungsgemäßen Käfigmutter;
Fig. 2 die erfindungsgemäße Käfigmutter von der Einschraubseite her gesehen; und
Fig. 3 bis Figur 6 verschiedene räumliche Darstellungen der erfindungsgemäßen Käfigmutter.

### Bester Weg zur Ausführung der Erfindung

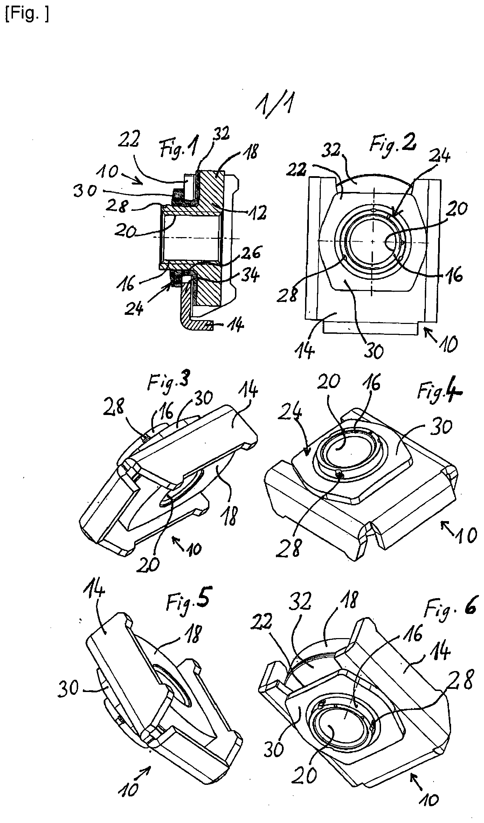

Figur 1 zeigt eine erfindungsgemäße Käfigmutter, die entlang der Einschraubachse geschnitten dargestellt ist.

Die dargestellte erfindungsgemäße Käfigmutter 10 weist einen Mutternkörper 12 auf, der in einem Käfig 14 aufgenommen ist. Der Mutternkörper 12 weist einen zylindrischen Ansatz 16 und ein verbreitertes Halteelement 18 auf. Der zylindrische Ansatz 16 trägt dabei ein koaxiales Innengewinde 20 und erstreckt sich durch eine Öffnung 22 in dem Käfig 14 nach außen.

Der Innendurchmesser der Öffnung 22 ist dabei wesentlich größer als der Außendurchmesser des zylindrischen Ansatzes 16, aber kleiner als das Außenabmaß des Halteelementes 18.

Hier ist die Öffnung 22 nach einer Seite hin aufgebrochen, um die Montage des Mutternkörpers 12 in den Käfig 14 zu erleichtern.

Zwischen dem Käfig 14 und dem zylindrischen Ansatz 16 ist erfindungsgemäß eine einstückig ausgebildete Isolatorvorrichtung 24 angeordnet. Die Isolatorvorrichtung 24 weist einen hohlzylindrischen Körper 26 auf, mit dem sie an dem zylindrischen Ansatz 16 fest angebracht ist. Die Isolatorvorrichtung 24 kann dabei durch Presssitz, Verklebung oder, wie hier anhand der Verstemmspuren 28 erkennbar, durch Verstemmen an dem zylindrischen Ansatz 16 des Mutternkörpers 12 befestigt sein. Die Verstemmung zwischen dem zylindrischen Ansatz 16 des Mutternkörpers 12 und der Isolatorvorrichtung 24 erfolgt dabei vorzugsweise an drei mit jeweils mit 120° oder vier (nicht dargestellten) mit jeweils 90° beabstandeten Punkten. Dadurch sitzt die Mutter verliersicher im Käfig 14 und in der Isolatorvorrichtung 24. Der hohlzylindrische Körper 26 der Isolatorvorrichtung 24 weist an seinen beiden Enden sich flächig nach außen erstreckende Isolatorplatten 30, 32 auf. Diese beiden Isolatorplatten 30 und 32 sind vom Abstand in Axialrichtung so an dem hohlzylindrischen Körper 26 angebracht, dass der Käfig 14 sich leicht (nicht klemmend) zwischen den beiden Isolatorplatten 30, 32 bewegen kann. An den Isolatorplatten 30, 32 sind jeweils vier (nicht dargestellte) Hochpunkte angebracht, damit die Isolatorplatten nicht mit ihrer gesamten Fläche, sondern nur an tangentialen Punkten den Käfig 14 berühren. So wird ein Verkleben durch Adhäsions- und Kohäsionskräfte der Lacke vermieden. Zwischen diesen Isolatorplatten 30, 32 ist der Rand 34 der Öffnung 22 in dem Käfig 14 so aufgenommen, dass er zumindest radial zu der Rotationsachse des zylindrischen Ansatzes 16 beweglich ist.

Die dem Halteelement 18 abgewandte Isolierplatte 30 weist dabei die Form eines abgerundeten, seitlich ausgebeulten Rechteckes auf, während die Form der am Halteelement angeordneten Isolierplatte 32 das gesamte Halteelement 18 in Richtung auf den Käfig 14 hin abdeckt mit leichtem Überstand, so dass der Mutternkörper 12 den Käfig 14, egal in welcher Lage verbaut, waagerecht, Überkopf oder seitlich, nicht direkt berührt und somit den Mutternkörper isoliert. Es kann somit kein elektrischer Fluss erfolgen.

Das Halteelement 18 weist dabei die Form einer dicken, zylindrischen, an zwei gegenüberliegenden Seiten abgeschnittenen Kreisscheibe auf.

Durch die vorliegende Erfindung wird eine wesentlich einfachere Fertigung einer elektrisch isolierenden Käfigmutter ermöglicht, wobei gleichzeitig die mechanische Widerstandsfähigkeit erheblich verbessert wird und eine bessere Isolierung zwischen Mutternkörper und Käfig sichergestellt wird.

## Patentansprüche

1. Elektrisch isolierende Käfigmutter (10) mit einem Mutternkörper (12), der in einem Käfig (14) aufgenommen ist, bei der der Mutternkörper (12) einen zylindrischen Ansatz (16) und ein verbreitertes Halteelement (18) umfasst, und der zylindrische Ansatz (16) ein Innengewinde (20) trägt und sich durch eine Öffnung (22) in dem Käfig (14) nach außen erstreckt, wobei der Innendurchmesser der Öffnung (22) wesentlich größer als der Außendurchmesser des zylindrischen Ansatzes (16) aber kleiner als das Außenabmaß des Halteelementes (18) ist, und zwischen dem Käfig (14) und dem zylindrischen Ansatz (16) eine Isolatorvorrichtung (24) angeordnet ist, wobei die Isolatorvorrichtung (24) einstückig ausgebildet ist und die Käfigmutter (10) dadurch nur aus drei Bauteilen (12, 14, 24) besteht, wobei die Isolatorvorrichtung (24) einen hohlzylindrischen Körper (26) aufweist, **dadurch gekenntzeichnet, dass** die Isolatorvorrichtung (24) mit dem hohlzylindrischen Körper (26) an dem zylindrischen Ansatz (16) fest angebracht ist, und der hohlzylindrische Körper (26) an beiden Enden sich flächig nach außen erstreckende Isolatorplatten (30, 32) aufweist, zwischen denen der Rand (34) der Öffnung (22) in dem Käfig (14) zumindest radial zu der Rotationsachse des zylindrischen Ansatzes (16) beweglich aufgenommen ist.

2. Elektrisch isolierende Käfigmutter (10) nach Anspruch 1, **dadurch gekennzeichnet, dass** die am Halteelement (18) angeordnete Isolierplatte (32) das gesamte Halteelement (18) in Richtung auf den Käfig (14) hin abdeckt mit leichtem Überstand, so dass der Mutternkörper den Käfig, egal in welcher Lage verbaut, waagerecht, Überkopf oder seitlich, nicht berührt.

3. Elektrisch isolierende Käfigmutter (10) nach Anspruch 2, **dadurch gekennzeichnet, dass** die am Halteelement (18) angeordnete Isolierplatte (32) länglich rechteckig ausgebildet ist, und zwei einander gegenüberliegende längere Seiten aufweist.

4. Elektrisch isolierende Käfigmutter (10) nach Anspruch 1, 2 oder 3, **dadurch gekennzeichnet, dass** die dem Halteelement (18) abgewandte Isolierplatte (30) die Form eines abgerundeten, seitlich ausgebeulten Rechtecks aufweist.

5. Verfahren zur Herstellung einer Käfigmutter (10) nach Anspruch 1, 2, 3 oder 4, **dadurch gekennzeichnet, dass** die Isolatorvorrichtung (24) seitlich in den Käfig (14) eingeschoben wird und der Mutternkörper (12) in Axialrichtung in die Isolatorvorrichtung (24) eingesteckt oder eingepresst und dort verstemmt wird.

## Claims

1. Electrically insulating cage nut (10) with a nut body (12) which is incorporated into a cage (14) where the nut body (12) surrounds a cylindrical base (16) and a widened retaining element (18), and the cylindrical base (16) bears an inner thread (20) and extends outwards through an opening (22) in the cage (14) whereby the inner diameter of the opening (22) is significantly larger than the outer diameter of the cylindrical base (16) but smaller than the outer dimension of the retaining element (18), and an insulating device (24) is located between the cage (14) and the cylindrical base (16), whereby the insulating device (24) is formed in one piece and the cage nut (10) consequently only exists of three components (12, 14, 24), whereby the insulating device (24) has a hollow cylindrical body (26) **characterized in that** the insulating device (24) is permanently fixed to the cylindrical base (16) and the hollow cylindrical body (26) has insulation panels (30, 32) which extend outwards flatly, between which the edge (34) of the opening (22) in the cage (14) is located at least radially to the rotation axis of the cylindrical base (16).

2. Electrically insulating cage nut (10) according to claim 1, **characterized in that** the insulating panel (32) located on the retaining element (18) covers the complete retaining element (18) in the direction of the cage (14) with a slight overhang so that the nut body does not contact the cage, horizontally, overhead or laterally, irrespective of the position in which it is installed.

3. Electrically insulating cage nut (10) according to claim 2, **characterized in that** the insulating panel (32) located on the retaining element (18) is of an oblong shape and has two longer facing sides.

4. Electrically insulating cage nut (10) according to claim 1, 2 or 3, **characterized in that** the insulating panel (30) facing away from the retaining element (18) has the form of a rounded, swollen rectangle.

5. Process for the manufacture of a cage nut (10) according to claim 1, 2, 3 or 4, **characterized in that** the insulating device (24) is pushed into the side of the cage (14) and the nut body (12) is plugged or pressed into the insulating device (24) in axial direction and is sealed into place there.

## Revendications

1. Écrou cage électriquement isolant (10) avec un corps d'écrou (12) qui est logé dans une cage (14) pour lequel le corps d'écrou (12) comprend une embase cylindrique et un élément de maintien (18) élargi, et l'embase cylindrique (16) porte un filet intérieur (20) et s'étend vers l'extérieur par une ouverture (22) dans la cage (14), ce faisant le diamètre intérieur de l'ouverture (22) est nettement plus grand que le diamètre extérieur de l'embase cylindrique (16) mais plus petit que la dimension extérieure de l'élément de maintien (18) et un dispositif isolant (24) est disposé entre la cage (14) et l'embase cylindrique (16), ce faisant le dispositif isolant (24) est constitué d'une seule pièce et l'écrou de cage (10) ne consiste ainsi qu'en trois composants (12, 14, 24), ce faisant le dispositif isolant présente un corps cylindrique creux (26) **caractérisé en ce que** le dispositif isolant est monté fixement avec le corps cylindrique creux (26) sur l'embase cylindrique et que le corps cylindrique creux présente en ses deux extrémités des plaques isolantes (30, 32) s'étendant sur toute la surface vers l'extérieur entre lesquelles le bord (34) de l'ouverture (22) est logé de manière à pouvoir bouger dans la cage (14), du moins dans le sens radial par rapport à l'axe de rotation de de l'embase cylindrique (16).

2. Écrou cage électriquement isolant (10) selon la revendication 1, **caractérisé en ce que** que la plaque isolante (32) disposée sur l'élément de maintien (18) recouvre l'ensemble de l'élément de maintien (18) dans le sens de la cage (14) avec un léger dépassement de sorte que le corps d'écrou ne soit pas en contact avec la cage, quelle que soit la position de montage, horizontalement, au-dessus ou latéralement.

3. Écrou cage électriquement isolant (10) selon la revendication 2, **caractérisé en ce que** la plaque isolante (32) disposée sur l'élément de maintien (18) est configurée en forme rectangulaire et présente deux côtés longitudinaux se faisant face.

4. Écrou cage électriquement isolant (10) selon la revendication 1, 2 ou 3 **caractérisé en ce que** la plaque isolante (30) tournée dans le sens opposé à l'élément de maintien (18) a la forme d'un rectangle arrondi latéralement bombé.

5. Procédé de fabrication d'un écrou selon la revendication 1, 2, 3 ou 4 **caractérisé en ce que** le dispositif isolant (24) est poussé latéralement dans la cage (14) et que le corps d'écrou (12) est inséré ou pressé dans le sens axial dans le dispositif isolant (24) et y est goupillé
